# EUROPEAN PATENT SPECIFICATION

(11) **EP 4 311 696 B1**
(45) Date of publication and mention of the grant of the patent: **17.09.2025**
(21) Application number: 23176837.5
(22) Date of filing: 01.06.2023
(51) Int. Cl.: B60C 23/04, B60C 29/00, B60C 29/02

(54) **TIRE INFLATION VALVE AND RELATED VALVE-SENSOR ASSEMBLY**
REIFENAUFBLASVENTIL UND ZUGEHÖRIGE VENTILSENSORANORDNUNG
VALVE DE GONFLAGE DE PNEU ET ENSEMBLE CAPTEUR DE VALVE ASSOCIÉ

(30) Priority: 29.07.2022 IT 202200016167
(43) Date of publication of application: 31.01.2024
(73) Proprietor: Wonder SPA, 26100 Cremona (IT)
(72) Inventor: PERSICO, Stefano, 26100 CREMONA (IT); GOSI, Matteo, 26100 CREMONA (IT); CAZZANTI, Stefano, 26100 CREMONA (IT)
(74) Representative: Gualeni, Nadia

(56) References cited:
- CN-B- 102 259 566
- US-A1- 2016 178 075
- US-A1- 2020 324 587
- US-A1- 2021 170 815

## Description

The present invention relates to the field of road wheel tire inflation valves, in particular for vehicles, where the term vehicles generally refers to motor vehicles, vans, trucks, motorcycles or generally road transport means.

More in detail, the invention relates to a valve of the clamp-in type designed to be used in the field of Tire Pressure Monitoring System technology (TPMS), in which electronic sensors for detecting and transmitting certain operating parameters of the tires, in particular pressure, but also temperature, for example, are directly mounted to the valve itself and the valve is fastened to the wheel by means of a hole made in the rim.

The metal valves of the clamp-in type generally consist of a shaped head which is associated with a TPMS sensor, and of an elongated stem (or shank) which allows tire inflation/deflation operations (by means of a suitable inner valve) and the fastening of the valve itself to the wheel rim by means of suitable screw locking means.

CN 102 259 566 B describes a clamp-in type valve with a dome-shaped head enabling angular adjustment of the valve within an opening in the housing of an electronic device.

In the field of inflation valves associable with a TPMS, there is a need to have different variants of valves available, depending on the shape, material and thickness of the rim, the thickness, position and diameter of the hole for inserting the valve, just to name a few. Although such valves are now standardized, the introduction of the TPMS sensor leads to new and complex variables to be managed, such as the need to have a dedicated space for the valve head and for the TPMS sensor which must be oriented depending on the shape of the rim, and a dedicated space to tighten the sensor during assembly, without forgetting the requirement of safety of the sensor against possible impacts when mounting and unmounting the tire on the rim.

In the field of tire inflation valves for vehicles the need to have a valve and a related adjustable valve-sensor system which can adapt to different situations of use is thus felt.

It is the object of the present invention to provide a tire inflation valve for vehicles provided with a system for adjusting the position of the TPMS sensor which is easily mountable to and removable from the rim of the tire.

Such an object is achieved by a valve according to claim 1, by a valve-sensor assembly according to claim 9, and by a method of assembling a valve-sensor according to claim 12. Other embodiments of the valve according to the invention are described in the following claims.

Further features and advantages of the present invention will be more comprehensible from the following description, wherein:
- Figures 1a and 1b show an axonometric view and a longitudinal sectional view, respectively, of a valve-sensor assembly in accordance with the present invention;
- Figure 2 shows an exploded view of the valve-sensor assembly in Figure 1;
- Figures from 3a to 3c show the sequence of steps for assembling the valve-sensor assembly in Figure 1;

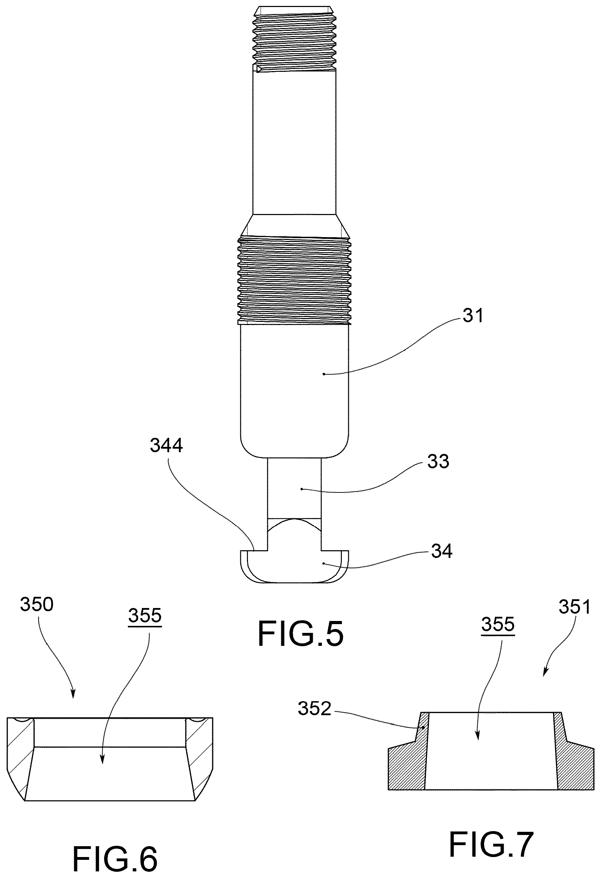

- Figures 4 to 7 show an embodiment of a valve, in accordance with the present invention, of the "rubber to metal" type, in a constructional variant; Figure 4 shows an axonometric view of the entire valve, Figure 5 shows the valve body, Figure 6 the domed head and Figure 7 the gasket;

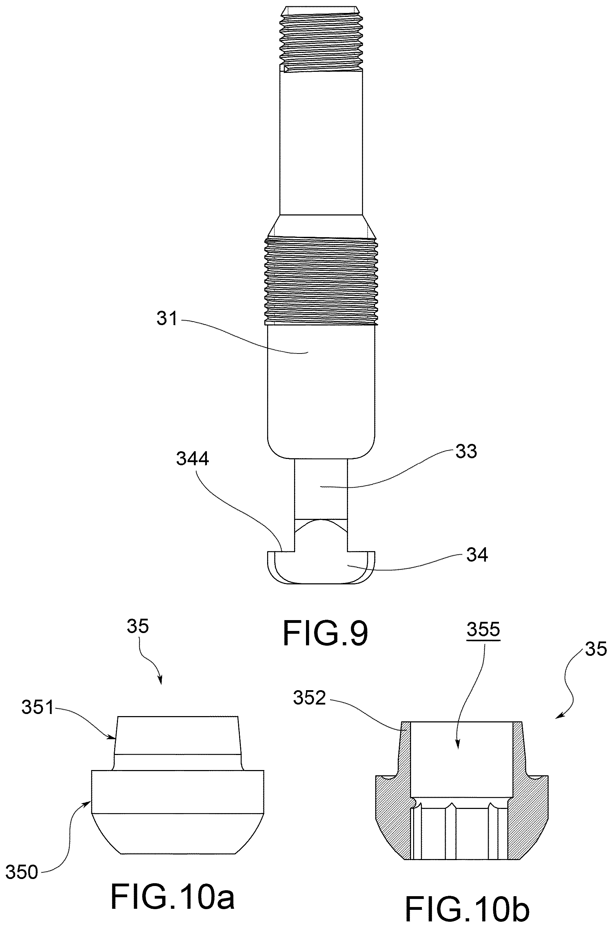

- Figures 8 to 10b show an embodiment of a valve, in accordance with the present invention, of the "rubber to metal" type, in a further constructional variant; Figure 8 shows an axonometric view of the entire valve, Figure 9 shows the valve body, Figure 10a the domed head with integrated gasket and Figure 10b the respective section;

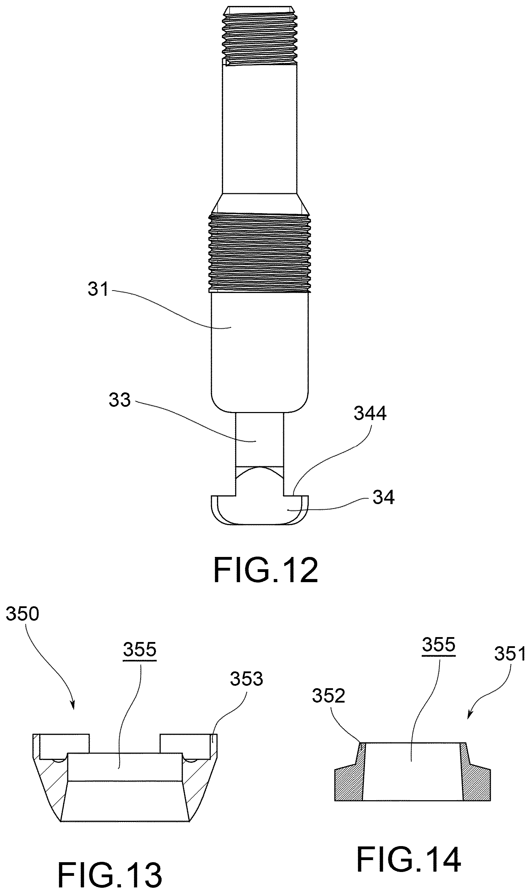

- Figures 11 to 14 show an embodiment of a valve, in accordance with the present invention, of the "metal to metal" type, in a constructional variant; Figure 11 shows an axonometric view of the entire valve, Figure 12 shows the valve body, Figure 13 the domed head and Figure 14 the gasket;

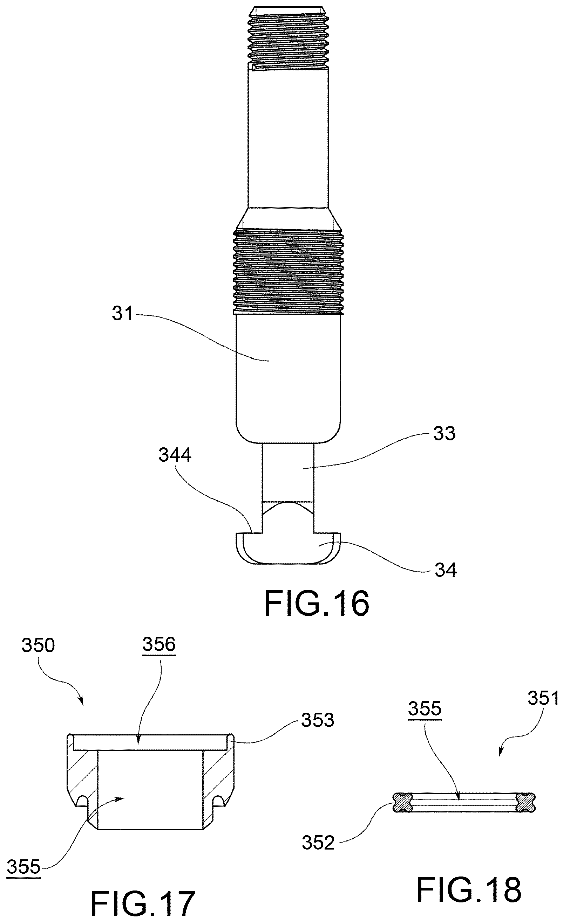

- Figures 15 to 18 show an embodiment of a valve, in accordance with the present invention, of the "metal to metal" type, in a further constructional variant; Figure 15 shows an axonometric view of the entire valve, Figure 16 shows the valve body, Figure 17 the domed head and Figure 18 the gasket;
- Figures 19 to 22 show an embodiment of a valve, in accordance with the present invention, of the "metal to metal" type, in another further constructional variant; Figure 19 shows an axonometric view of the entire valve, Figure 20 shows the valve body, Figure 21a a side view of the domed head, Figure 21b a top view thereof, Figure 21c a sectional view thereof, and Figure 22 the gasket;
- Figures 23a and 23b show an axonometric view of the valve body in a further embodiment;
- Figure 24 shows an axonometric view of the domed head in a further embodiment;
- Figures 25a and 25b show an axonometric view and a sectional view, respectively, of the domed head in another further embodiment;
- Figures 26a and 26b show a further embodiment of a valve in accordance with the present invention associated with the sensor, in a partially sectional axonometric view and in a longitudinal sectional view, respectively;
- Figures 27a, 27b and 27c show another further embodiment of a valve in accordance with the present invention associated with the sensor, in a partially sectional axonometric view in the assembled configuration (Figure 27a), and in a side sectional view when mounted to the sensor (27b and 27c), respectively.

In the above Figures, identical or similar elements are indicated by the same reference numerals.

With reference to the above Figures, numeral 30 generally indicates a vehicle tire inflation valve (hereinafter valve 30) in accordance with the present invention.

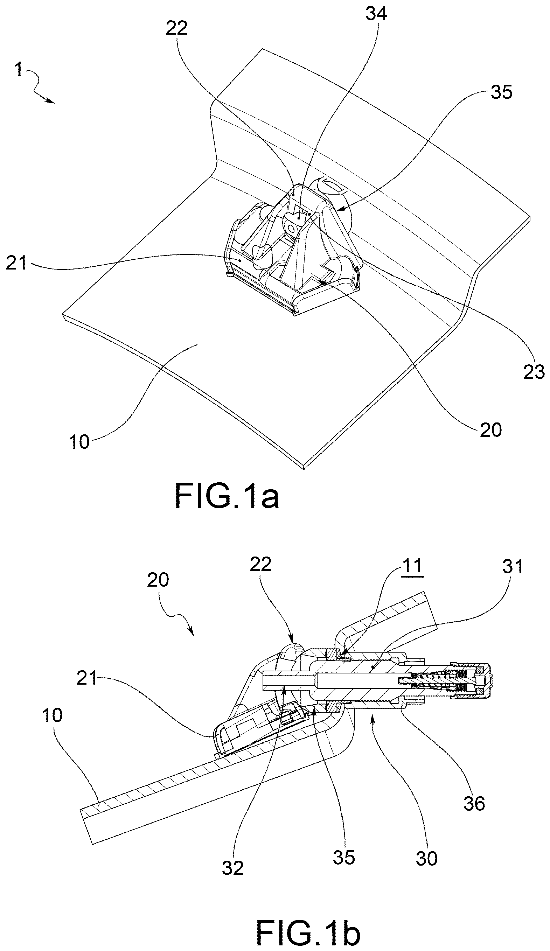

With reference to Figures 1a and 1b, a valve-sensor assembly 1 is shown applied to the rim 10 of a tire, in which a sensor 20 of the type with TPMS technology is fixed in place on a rim 10 by means of a tire inflation valve 30.

The sensor-valve assembly 1 comprises a tire pressure sensor 20 and a tire inflation valve 30.

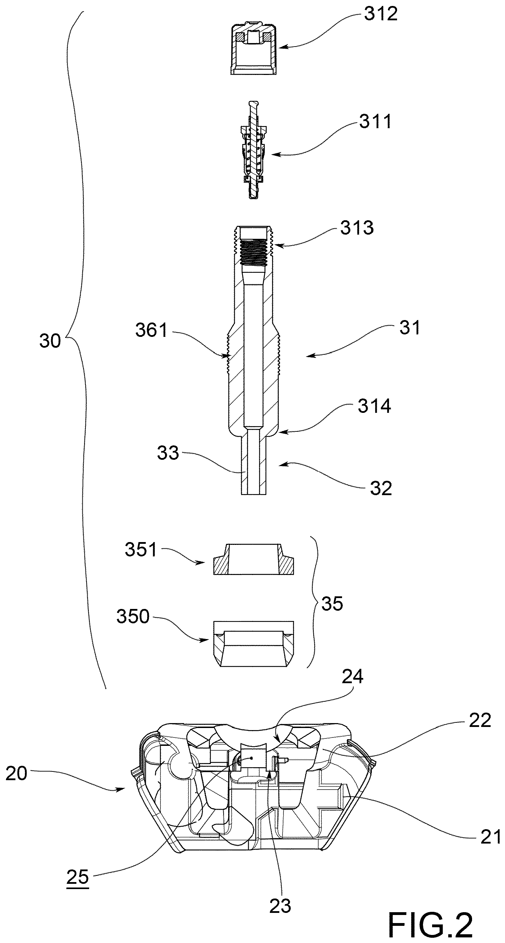

As shown in detail in Figure 1b and in Figure 2, the sensor 20 comprises a housing 21 inside which sensor means 211 are contained for detecting the pressure and/or temperature of a tire, and a mounting neck 22 integrally formed with the housing 21. The mounting neck 22 defines an upper surface 23, an opposite lower face 24, and a through duct 25 between the upper surface 23 and lower face 24. The upper surface 23 at least partially defines an abutment which acts as a coupling means with the valve 30. The abutment can be a flat portion, as in Figure 2, or a recessed portion, or a protruding portion of the upper surface 23. The through duct 25 has an upper end at the upper surface 23 and a lower end at the lower face 24 of the mounting neck 22.

The valve 30 comprises a valve body 31 in which a mechanism 311 is housed. A lid 312 is screwed to the distal end 313 of the valve body 31.

The valve 30 includes a mounting rod 32 which extends from the valve body 31, at a proximal end 314. The mounting rod 32 is made in one piece with the valve body 31. The mounting rod 32 is substantially T-shaped.

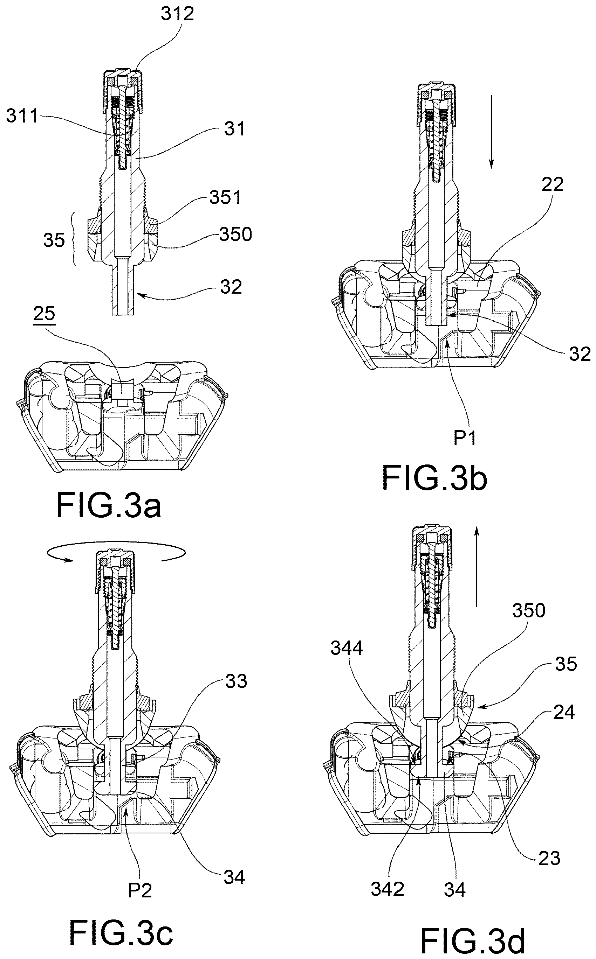

The mounting rod 32 is provided with a rod body 33 and a locking head 34. The rod body 33 extends from the valve body 31 and ends in the locking head 34. The outer diameter of the rod body 33 is smaller than the inner diameter of the through duct 25 of the sensor 20, so that the valve 30 can be rotated with respect to the sensor 20 between a first angular position P1 (shown in Figure 3b) and a second angular position P2 (shown in Figure 3c). The locking head 34 is a non-circular locking element, configured to cross, only when it is in the first angular position P1, the through duct 25 of the mounting neck 22 of the sensor 20.

The locking head 34 comprises an upper face 342 and an opposite lower surface 344.

When the valve 30 is in the first angular position P1 (Figure 3b), the entire mounting rod 32 is slidable in the through duct 25. On the contrary, when the valve 30 rotates up to the second angular position P2 (Figure 3c), the locking head 34 is offset with respect to the through duct 25 and cannot cross the through duct 25.

The valve 30 is provided with a valve head 35 which is an element different and separate from the valve body 31. The valve head 35 has a hole 355 through which the mounting rod 32 passes. The hole 355 passes through the valve head 35 longitudinally, from side to side. The valve head 35 is, in fact, fittable and slidable on the valve body 31, at the proximal end 314. Advantageously, the valve body 31 is insertable through the valve head 35 both from the distal end 313 thereof and from the proximal end 314 thereof. This simplifies the step of assembling these two components, since there is no preferential direction of insertion.

The valve head 35 performs some important functions: it achieves the abutment between the valve 30 and the rim 10 of the tire; it creates, with the related gasket, the seal between the valve 30 and the rim 10 of the tire; it allows the angular adjustment of the sensor 20 with respect to the rim 10 of the tire; it acts as a sensor abutment.

The valve head 35 is provided with a sealing element 351.

Advantageously, the sealing element is also a retention element stopping, by friction, the valve head 35 in place on the valve body 31. Such a solution allows pre-assembling these two components.

The valve head 35 comprises a domed portion 350, which allows the angular adjustment of the sensor 20, and a sealing portion 351, which creates the seal between the valve 30 and the rim 10. Both the domed portion 350 and the sealing portion 351 at least partially define the hole 355. Once the valve head 35 is fitted onto the valve body 31, the domed portion 350 is more proximally arranged with respect to the sealing portion 351.

The domed portion 350 is in the shape of a half-sphere at the proximal end thereof. In the shape of a sphere means an overall domed geometry, irrespective of the surface processing; the domed portion 350 can in fact be smooth, coarse, or stepped.

As shown in Figure 2, the mounting neck 22 of the sensor 20 is provided with a concave lower face 24, with a domed-shaped concavity. The lower face 24 has a concavity in the shape of a half-sphere. The valve head 35, and in particular the domed portion 350, is at least partially inserted, in a rotatable manner, into the concavity defined by the lower face 24 of the mounting neck 22 of the sensor 20. By virtue of the spherical coupling between the domed portion 350 and the lower face 24 it is possible to rotate the sensor 20 in the desired angular position.

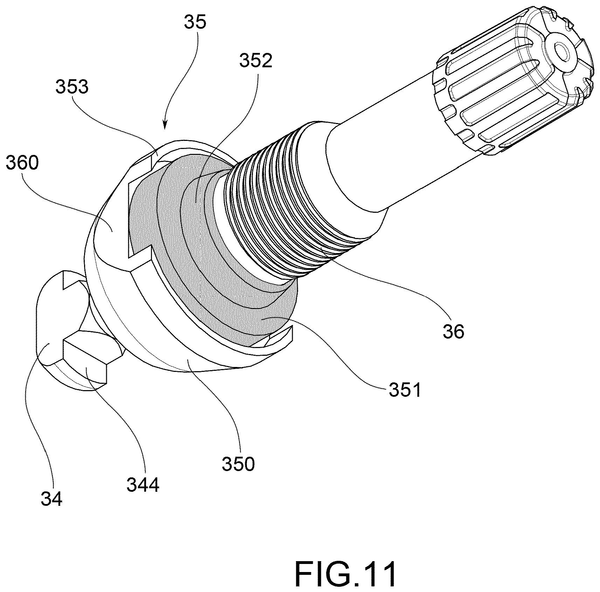

In the embodiments in Figures 11, 15 and 19, the domed portion 350 also creates the abutment between the valve 30 and the rim 10 of the tire. In such examples, the domed portion 350 is provided with an abutment edge 353.

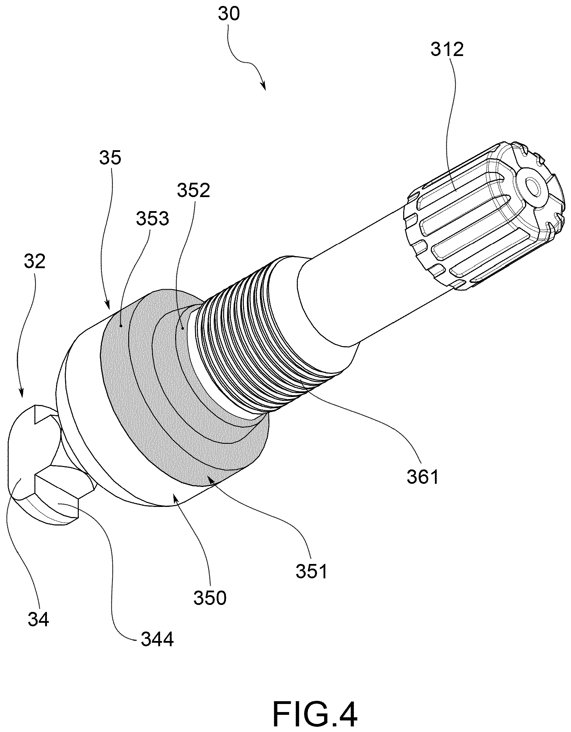

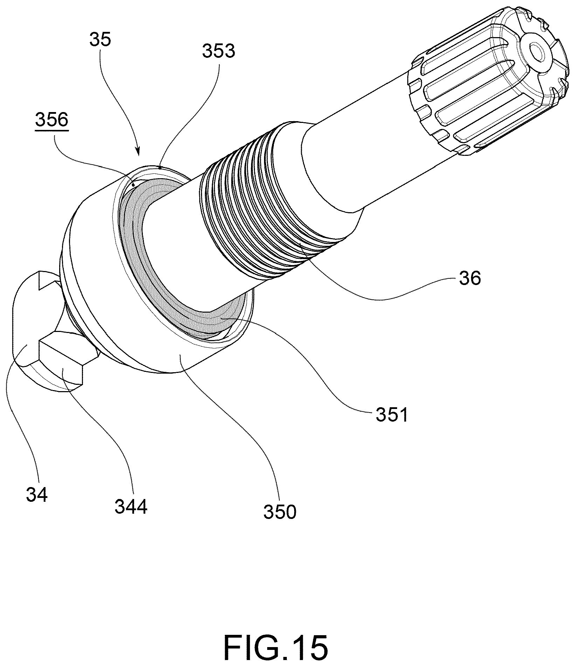

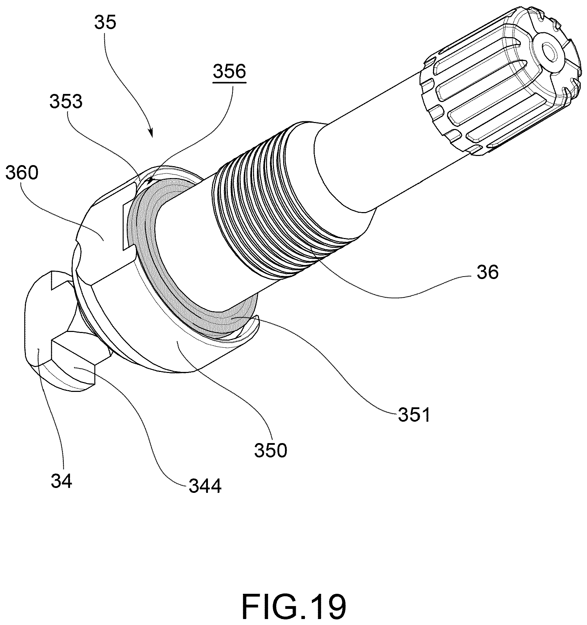

The sealing portion 351 creates the seal between the valve 30 and the rim 10. In the examples in Figures 4, 8 and 11, the sealing portion 351 comprises a sealing lip 352, which is thinner than the rest, protruding distally and adapted to create the seal between the valve 30 and the rim 10. In the examples in Figures 15 and 19, the sealing portion 351 consists of an O-ring or of an X-ring which also forms the sealing lip 352.

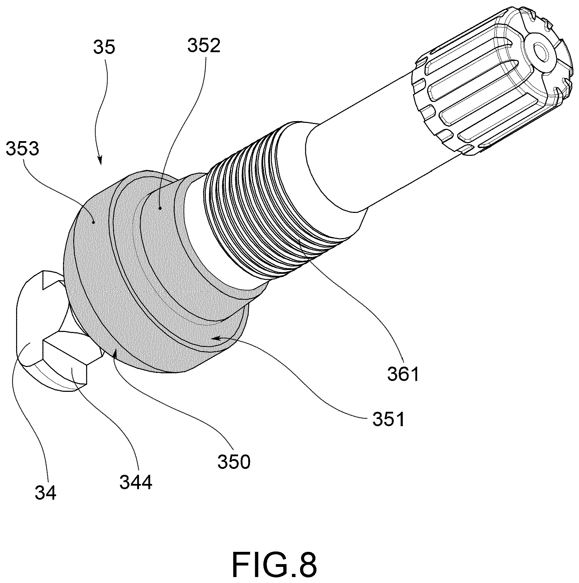

In the embodiments in Figures 4, 11, 15 and 19 the domed portion 350 and the sealing portion 351 are different elements, assembled to each other; in the example in Figure 8 the domed portion 350 and the sealing portion 351 are made in one piece.

In the embodiments in Figures 4, 11, 15 and 19, a further retention element, for example of the mechanical or friction type, could be required between the valve body 31 and the valve head 35, adapted to prevent the relative movement between said two elements during movement without sensor.

In the embodiments in Figures 4 and 8, the seal between the valve 30 and the rim 10 of the tire is of the "rubber to metal" type, in which the abutment inside the hole of the rim is performed directly by the sealing lip 352, while the seal outside the hole of the rim is carried out by the outer crown 353.

In the example in Figure 4, the valve head 35 comprises a solid domed portion 350 and a rubber sealing portion 351, assembled to each other.

In the example in Figure 8, the valve head 35 comprises a domed portion 350 and a sealing portion 351 made in one piece, preferably in rubber.

In the embodiments in Figures 4, 8 and 11, the sealing element 351 can have a configuration with one or more points of contact with the outer surface of the valve body 31.

In the embodiments in Figures 11, 15 and 19, the seal between the valve 30 and the rim 10 of the tire is of the "metal to metal" type, in which the abutment on the rim is created by the abutment edge 353 of the domed portion 350, and the seal between the valve 30 and the rim 10 is ensured by the sealing portion 351.

In the example in Figure 11, the valve head 35 comprises a solid domed portion 350 and a rubber sealing portion 351, assembled to each other.

In the example in Figures 15 and 19, the valve head 35 comprises a solid domed portion 350 and a rubber sealing portion 351, in the form of an O-ring or of an X-ring, assembled to each other. In such embodiments, the domed portion 350 is provided with an abutment edge 353 which also defines a seat 356 for hosting the sealing portion 351 in the form of an O-ring.

During the assembly of the valve-sensor assembly 1, the valve 30 is positioned in the first angular position P1 (Figure 3a) to keep the locking head 34 aligned with the through duct 25, thus allowing the insertion of the mounting rod 32 into the duct. Note that the valve head 35 is already fitted onto the valve body 31.

The mounting rod 32 is advanced inside the through duct 25 until the locking head 34 has completely crossed the mounting neck 22 of the sensor 20 and has come out of the upper end of said through duct 25 (Figure 3b).

At this point, the valve 30 rotates, for example by 90°, into the second angular position P2 (Figure 3c) in which the locking head 34 is offset with respect to the through duct 25 and can no longer pass therethrough. By withdrawing the valve 30, the lower surface 344 of the locking head 34 abuts against the upper surface 23 of the mounting neck 22 (Figure 3d). A bayonet connection between the sensor 20 and the valve 30 is thus obtained. At this point, the valve head 35 advances along the valve body 31 until it abuts, at the domed portion 350 thereof, inside the mounting neck 22. Note that in the configuration in Figure 3d, the valve-sensor assembly 1 is already assembled, but, by virtue of the spherical coupling between the valve head 35 and the mounting neck 22, it is still possible to adjust the position of the sensor.

Note that the locking head 34 has a geometry which allows a shape coupling with the mounting neck 22 of the sensor, so as to avoid the rotation of the valve body 31 when tightening the adjustment nut 36. Such a shape coupling can be, for example, a plane coupling between the locking head 34, provided with side faces, and the walls of the mounting neck 22 of the sensor 20, so as to avoid the relative axial rotation between the valve and the sensor, and instead allow the tilting movement required to adjust the position of the sensor.

The valve 30 further comprises a nut 36 for the adjustment and tightening on the rim, which is screwable onto the valve body 31 at a suitable outer thread 361. Once the valve-sensor assembly 1 has been assembled as in Figure 3d, and a once the valve body 31 has been inserted into the appropriate hole 11 of the rim 10 of the tire, as in Figure 1b, the adjustment nut 36 can be screwed onto the valve body 31 to advance along the axial direction and close all the components of the valve-sensor assembly, sandwiched. In fact, by screwing the adjustment and tightening nut 36, on the one hand, the locking head 34 is pulled to abut against the upper surface 23 of the mounting neck 22 and, on the other hand, the valve head 35 is pushed to abut inside of the concavity of the lower face 24 of the mounting neck 22, fixing the sensor 20 in the desired angular position with respect to the valve 30 and with respect to the rim 10 of the tire. Simultaneously, the adjustment nut 36 abuts against the outer surface of the rim 10.

In one embodiment, the valve 30 is obtained using the following materials: lid 312 made of plastic; valve body 31, adjustment nut 36 and solid part of the valve head 35 made of aluminum or steel; sealing portion 351 made of rubber.

In an embodiment, the domed portion 350 is made of metal or plastic material and the sealing portion 351 is made of rubber or plastic material.

In one embodiment, the domed portion 350 and the sealing portion 351 are made in one piece and in plastic or rubber material.

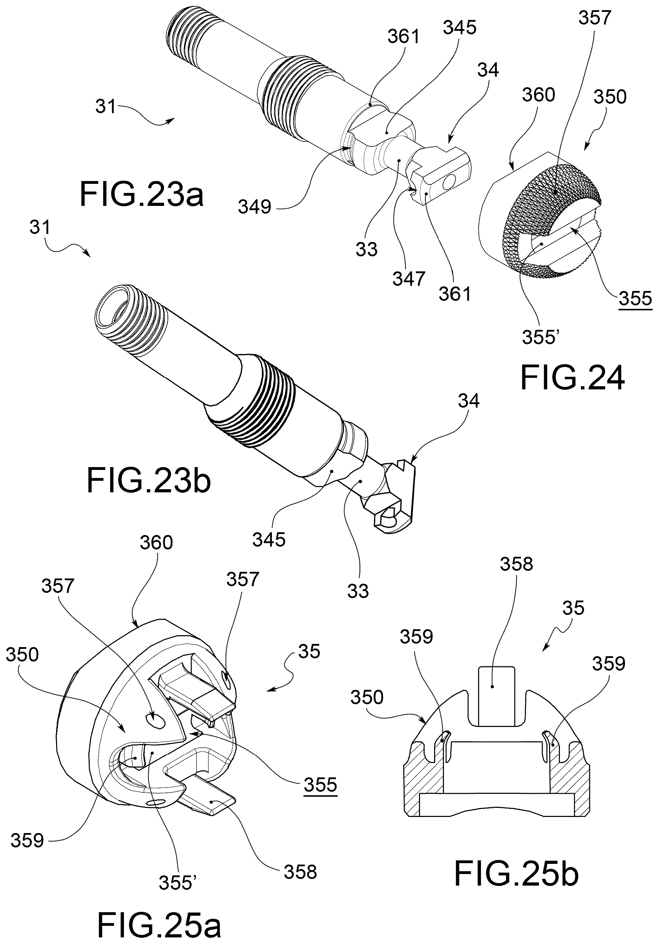

With reference to Figures 23 to 27c, further embodiments of the valve in accordance with the present invention are shown.

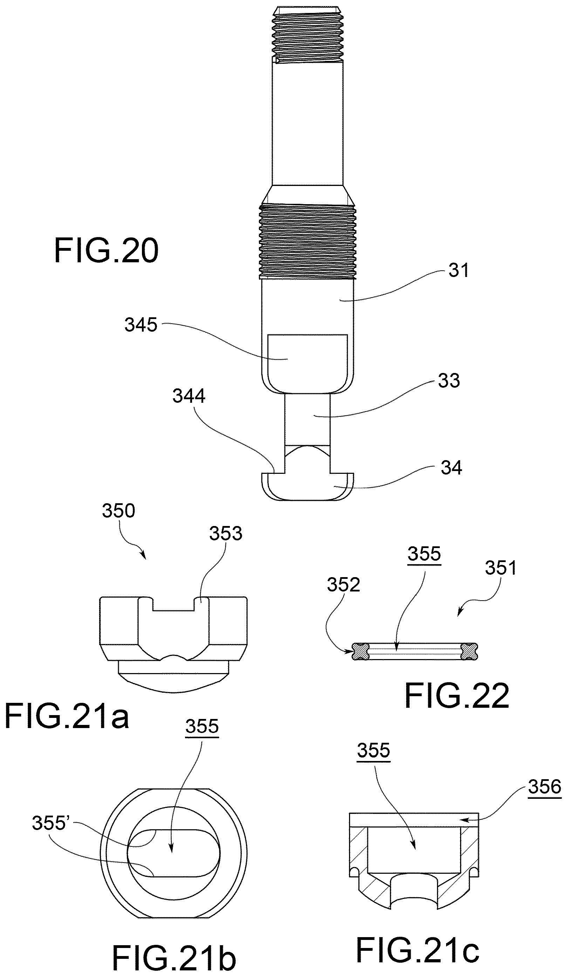

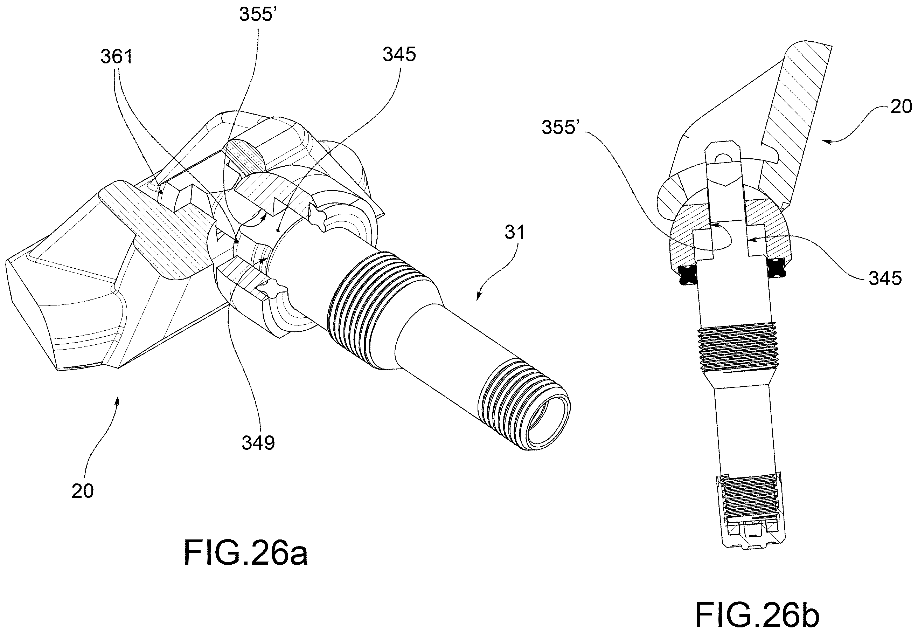

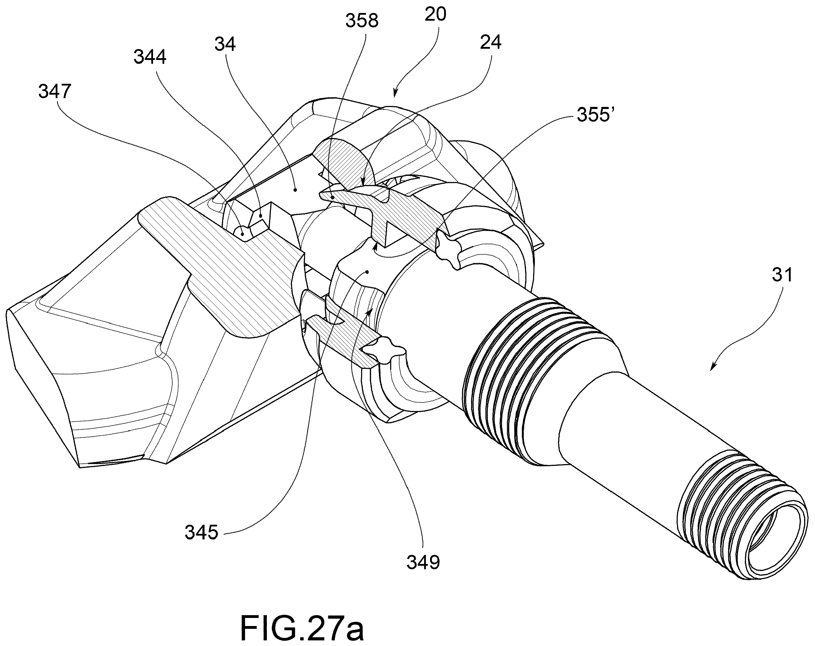

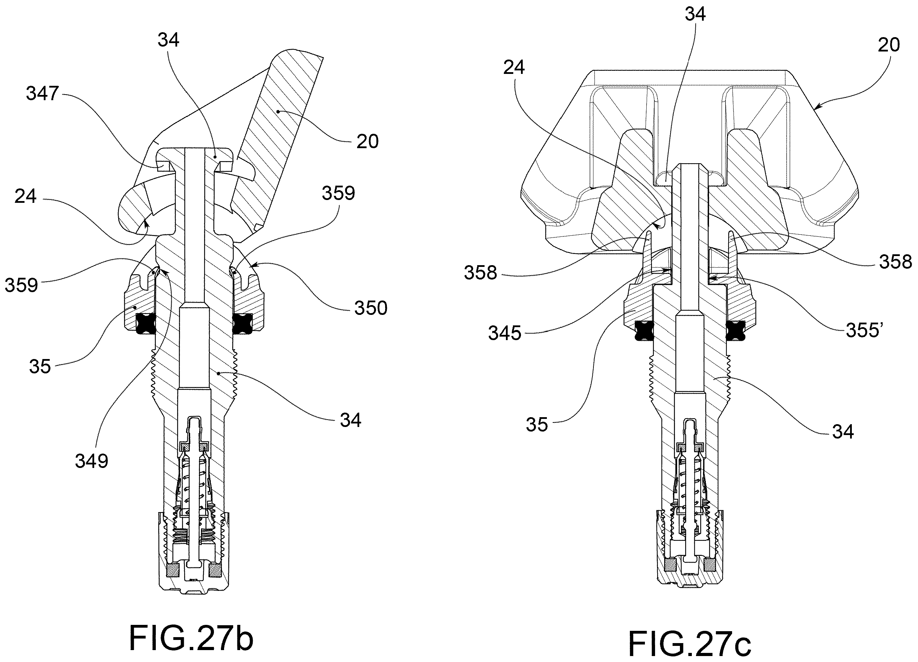

When designing the valve, it is noted that when the adjustment nut 36 is screwed onto the valve body 31, the final torque can deform the rod body 33 which supports the locking head 34, until it breaks. Therefore, the valve body 31 preferably has, as in Figures 20 and 23, for example, at least one abutment wall 345 adapted to engage at least one of the side walls 355' (visible in Figure 21b, for example) which define the hole 355 which passes through the valve head 35. Preferably, the valve body 31 has a pair of abutment walls 345, opposed to each other, adapted to engage respective side walls 355', opposed to each other, of the hole 355 of the valve head 35. Advantageously, such a coupling (visible in Figures 26a, 26b, 27a, 27c, for example) acts as an impediment to the rotation between the valve body 31 and the valve head 35, causing the final torque, applied through the nut, by means of the sealing portion 351, to be discharged directly onto the rim 10 of the tire, safeguarding the rod body 33 which holds the locking head 34.

When designing the valve, it is noted that, when using the valve-sensor assembly on the rim 10, the sensor 20 is subject to strong centrifugal and vibrational stresses which can cause it to slip with respect to the expected initial position. Therefore, the domed portion 350 of the valve head 35 is preferably provided with a surface portion 357 which is at least partially coarse or rough, i.e., not smooth, or provided with a plurality of surface recesses (see Figures 24 and 25a). The coarseness is obtained, for example, by means of knurlings, or millings, or chip removals, or with reliefs and/or depressions obtained by molding. Advantageously, such a solution improves the grip of the sensor 20 on the valve head 35, thus optimizing the resistance thereof to lifting and sliding with respect to the desired position.

Still in order to improve the grip of the sensor 20 on the valve head 35, also the locking head 34 of the valve body 31 is preferably provided with a surface portion 347 which is at least partially coarse or rough, i.e., not smooth, or provided with a plurality of surface recesses. For example, the coarse surface portion 347 is arranged at least at the lower surface 344 of the locking head 34 (see Figures 23 and 27a ). The coarseness is obtained for example by interrupted drilling, or chip removal or with reliefs and/or depressions obtained by molding.

When designing the valve, it is noted that when installing the valve-sensor assembly inside the hole of the rim 10, a disengagement of the valve body 31 from the sensor 20 can occur, and in particular a disengagement of the locking head 34 from the related seat provided in the mounting neck 22 of the sensor 20. Therefore, the valve head 35 has preferably been provided with at least one elastic main flap 358, visible in Figures 25a and 25b, for example. Even more preferably, the valve head 35 has been provided with at least one pair of elastic and opposite main flaps 358. The main flaps 358 at least partially protrude with respect to the domed portion 350. Such main flaps 358 are flexible to elastically flex when they abut against the lower face 24 of the mounting neck 22 of the sensor, as in Figure 27a. Thereby, the main flaps 358 are elastically loaded and exert a force in the opposite direction, i.e., in the direction of extraction of the valve body 31 from the sensor 20. Such a force keeps the locking head 34 engaged in the related seat provided in the mounting neck 22 of the sensor 20, until the fixing of the valve-sensor assembly to the rim is correctly tightened, thus avoiding the accidental disengagement of the sensor from the valve during the assembly and transport steps. Furthermore, such a force keeps the anti-rotation surfaces between the body and the head, i.e., the abutment walls 345 of the valve body 31 and the side walls 355' of the hole 355 of the valve head 35, correctly aligned and facing each other (as shown in Figure 27a).

It is also noted, for example, when transporting the valve 30, still without the sensor 20, that accidental impacts can cause the valve body 31 to come out of the valve head 35. Therefore, the valve head 35 has preferably been provided with at least one elastic secondary flap 359, visible in Figures 25a and 25b, for example. Even more preferably, the valve head 35 has been provided with at least one pair of elastic and opposite secondary flaps 359. The secondary flaps 359 are contained within the outline of the domed portion 350 and do not protrude therefrom. Such secondary flaps 359 are flexible and snap engage into special recesses 349, or grooves, obtained on the valve body 31, and in particular at the base of the rod body 33, as in Figure 27b. Advantageously, the secondary flaps 359 of the valve head 35, snap engaged in the respective recesses 349 of the valve body 31, thus prevent the accidental disengagement of the head from the body even before mounting the sensor 20.

As shown in Figure 25a, the domed portion 350 is interrupted in four points: in two opposite points to allow the passage of the locking head 34, and in two further opposite points where the main flaps 358 are located. A domed geometry defined by four segments is thus formed.

The main flaps 358 are positioned further towards the periphery of the domed portion 350 as compared to the secondary flaps 359, which are arranged more centrally to engage the valve body 31. The main flaps 358 are offset with respect to the secondary flaps 359, for example by 90 degrees.

Preferably, the valve head is provided with chamfers 360 at the bottom end edge thereof, i.e., at the contact area with the rim 10, as shown in Figures 11, 19, 24 and 25a, for example. Such a solution improves the compatibility of the valve with the different types of rims on the market, without the risk of collisions with additional geometries and reduced spaces on the rim 10.

In an embodiment, shown in Figures 20 and 23a, the locking head 34 is oriented aligned with the abutment walls 345, i.e., they face the same plane.

In a further embodiment, shown in Figure 23b, the locking head 34 is rotated with respect to the abutment walls 345, i.e., they do not face the same plane. Advantageously, the rotation of the locking head 34 with respect to the abutment walls 345 prevents expelling the valve 30 from the hole of the rim 10 in case of the sensor breaking under stress. In fact, while the abutment walls 345 keep the valve body 31 rotationally integral with respect to the valve head 35, the locking head 34, being rotated, cannot slide through the hole 355 of the valve head 35.

Preferably, the valve body 31 is provided with chamfers and/or bevels 361, visible in Figure 23a, in the direction of insertion into the sensor, so as to eliminate sharp edges. Such a solution facilitates the assembly of the valve 30 and prevents damage to gaskets, sealing portion 351 and sensor 20.

The present invention also relates to a method of assembling a valve-sensor, which includes inserting the locking head 34 of the valve body 31 of the valve 1 into the through duct 25 of the mounting neck 22 of the sensor 20, from the lower face 24 of the mounting neck 22 (Figure 3b), i.e., from the distal direction towards the proximal direction.

Such a method also includes that, when the valve 1 is mounted to the sensor 20, the valve head 35 is already pre-assembled on the valve body 31.

Innovatively, a vehicle tire inflation valve in accordance with the present invention allows fixing the valve-sensor assembly in place on the rim of the tire with a single screwing operation.

Advantageously, the locking head 34 of the valve 1 is assembled to the mounting neck 22 of the sensor 20 from the distal direction towards the proximal direction. This simplifies the step of assembling the valve on the sensor, since the "one side only" assembly system of all the components makes it simpler and more advantageous, both automatically and manually.

Advantageously, when the valve 1 is mounted to the sensor 20, the valve head 35 is already pre-assembled on the valve body 31. This reduces the steps for mounting the valve on the sensor, since the assembly of the sliding components can occur on the same side as the valve, even in the absence of the sensor optionally coupled afterwards.

Advantageously, the valve in accordance with the present invention allows the sensor to be assembled to and disassembled from the valve by means of a bayonet coupling, or simply by means of the rotation of the valve itself. Such a method is faster and more convenient than conventional bolting techniques between valve and sensor.

Advantageously, the valve in accordance with the present invention allows changing the inclination of the TPMS sensor according to the different conditions of use, in a simple and effective manner, even when the valve and sensor are already pre-assembled.

Advantageously, the valve in accordance with the present invention allows easily replacing the TPMS sensor without removing either the valve from the rim or the domed portion and the related gasket, but by simply loosening the adjustment and tightening nut on the rim.

Advantageously, the valve in accordance with the present invention is provided with a structure which is simple and easy to use, since the sealing gasket is part of the valve head.

Advantageously, the valve head 35 with the domed portion 350 allows:
- obtaining high compatibility of the valve with the variable angle sensors 20 already on the market, provided with a concave lower face 24 in which the valve head 35 is housed;
- implementing anti-rotation systems which prevent relative movements between the body and the head (such as the engagement between the abutment walls 345 and the side walls 355' in Figures 26a and 27a);
- when associated to anti-rotation systems, simplifying the bayonet assembly since it is possible to rotate the whole valve 30;
- simplifying the production step as the domed shape is also obtainable by turning;
- increasing the available surface to accommodate solutions with increased friction, such as knurling or surface coarseness.

In order to meet contingent and specific needs, those skilled in the art may make several changes and variations to the valve described above, all contained within the scope of the invention as defined by the following claims.

## Claims

1. A vehicle tire inflation valve (30), comprising:
- a valve body (31) in which valve means (311) are housed, provided with a distal end to which a lid (312) is applied and with an opposite proximal end (314) ending with a mounting rod (32), said mounting rod (32) having a rod body (33) extending from the valve body (31) and ending with a locking head (34) with a greater size than said rod body (33);
- a valve head (35), slidably fitted onto the valve body (31) at the proximal end (314), provided with a hole (355) through which the mounting rod (32) passes, with a domed portion (350) and a sealing portion (351), said domed portion (350) being arranged proximally with respect to the sealing portion (351);
- an adjustment nut (36) being screwable onto the valve body (31) from the distal end;
wherein said locking head (34) of the mounting rod (32) is arranged proximally with respect to said valve head (35),
**characterized in that** the valve body (31) has at least one abutment wall (345) adapted to engage at least one of the side walls (355') which define the hole (355) which passes through the valve head (35).

2. A valve (30) according to claim 1, wherein said domed portion (350) is in the shape of a half-sphere.

3. A valve (30) according to any one of the preceding claims, wherein said mounting rod (32) is substantially T-shaped.

4. A valve (30) according to any one of the preceding claims, wherein the locking head (34) is oriented on a plane coincident with or parallel to a plane defined by said at least one abutment wall (345).

5. A valve (30) according to any one of the preceding claims, wherein the locking head (34) is rotated with respect to a coincident or parallel plane defined by said at least one abutment wall (345).

6. A valve (30) according to any one of the preceding claims, wherein the domed portion (350) of the valve head (35) is provided with a surface portion (357) which is at least partially coarse or rough or provided with a plurality of surface recesses or reliefs.

7. A valve (30) according to any one of the preceding claims, wherein the locking head (34) of the valve body (31) is provided with a surface portion (347) which is at least partially coarse or rough or provided with a plurality of surface recesses or reliefs.

8. A valve (30) according to any one of the preceding claims, wherein the valve head (35) is provided with at least one pair of elastic and opposite main flaps (358) at least partially protruding with respect to the domed portion (350).

9. A valve (30) according to any one of the preceding claims, wherein the valve head (35) is provided with at least one pair of elastic and opposite secondary flaps (359) contained in the outline of the domed portion (350), adapted to snap engage recesses (349) made on the rod body (33) of the valve body (31).

10. A valve-sensor assembly (1) comprising:
- a tire inflation valve (30) according to any one of the preceding claims;
- a pressure sensor (20) comprising:
- a housing (21) in which sensor means (211) are housed;
- a mounting neck (22), formed integrally with the housing (21), provided with an upper surface (23), an opposite lower face (24), and a through duct (25) between the upper surface (23) and lower face (24);
wherein the locking head (34) of the valve (30) is a non-circular locking element, configured to cross, when in a first angular position (P1), said through duct (25) of the pressure
sensor (20), and not to cross, when rotated by 90° tc a second angular position (P2), said through duct (25) of the pressure
sensor (20) to achieve a bayonet coupling between the valve (30) and the pressure sensor (20).

11. A valve-sensor assembly (1) according to claim 10, wherein said lower face (24) of the mounting neck (22) of the pressure
sensor (20) is concave, with dome-shaped concavity, and
wherein, between the domed portion (350) of the valve head (35) and the concave lower face (24) of the mounting neck (22) of the pressure
sensor (20), a spherical coupling is obtained for adjusting the position of the pressure sensor (20).

12. A method for assembling a valve-sensor assembly according to one of claims 10 or 11, which includes:
- fitting the valve head (35) onto the valve body (31);
- inserting the locking head (34) of the valve body (31) of the valve (1) into the through duct (25) of the mounting neck (22) of the pressure sensor (20) from the lower face (24) of the mounting neck (22).

13. A method according to claim 12, which includes:
screwing the adjustment nut (36) along the valve body (31), pulling the locking head (34) to abut against the upper surface (23) of the mounting neck (22), and pushing the valve head (35) to abut inside the concavity of the lower face (24) of the mounting neck (22), simultaneously constraining the valve and the pressure sensor in place.

## Patentansprüche

1. Reifenaufblasventil eines Fahrzeuges (30), umfassend:
- einen Ventilkörper (31), in dem Ventilmittel (311) aufgenommen sind, der mit einem distalen Ende versehen ist, an dem ein Deckel (312) angebracht wird, und der mit einem gegenüberliegenden proximalen Ende (314) versehen ist, das mit einer Montagestange (32) endet, wobei die Montagestange (32) einen Stangenkörper (33) aufweist, der sich von dem Ventilkörper (31) erstreckt und mit einem Verriegelungskopf (34) endet, der eine größere Abmessung als der Stangenkörper (33) aufweist;
- einen Ventilkopf (35), der verschiebbar an dem proximalen Ende (314) auf den Ventilkörper (31) eingebaut wird, der mit einer Bohrung (355), durch die die Montagestange (32) hindurchgeht, mit einem gewölbten Abschnitt (350) und einem Dichtabschnitt (351) versehen ist, wobei der gewölbte Abschnitt (350) proximal in Bezug auf den Dichtabschnitt (351) angeordnet ist;
- eine Einstellmutter (36), die auf den Ventilkörper (31) von dem distalen Ende geschraubt werden kann;
wobei der Verriegelungskopf (34) der Montagestange (32) proximal zu dem Ventilkopf (35) angeordnet ist,
**dadurch gekennzeichnet, dass** der Ventilkörper (31) mindestens eine Auflagewand (345) aufweist, die eingerichtet ist, mit mindestens einer der Seitenwände (355') in Eingriff zu kommen, die die Bohrung (355) definieren, die durch den Ventilkopf (35) hindurchgeht.

2. Ventil (30) nach Anspruch 1, wobei der gewölbte Abschnitt (350) eine halbkugelförmige Gestalt aufweist.

3. Ventil (30) nach einem der vorhergehenden Ansprüche, wobei die Montagestange (32) im Wesentlichen eine T-förmige Gestalt aufweist.

4. Ventil (30) nach einem der vorhergehenden Ansprüche, wobei der Verriegelungskopf (34) in einer Ebene ausgerichtet ist, die mit einer Ebene zusammenfällt oder zu dieser parallel ist, die durch mindestens eine Auflagewand (345) definiert wird

5. Ventil (30) nach einem der vorhergehenden Ansprüche, wobei der Verriegelungskopf (34) gegenüber einer zusammenfallenden oder parallelen Ebene gedreht wird, die durch mindestens einer Auflagewand (345) definiert wird.

6. Ventil (30) nach einem der vorhergehenden Ansprüche, wobei der gewölbte Abschnitt (350) des Ventilkopfes (35) mit einem Oberflächenabschnitt (357) versehen ist, der mindestens teilweise roh oder uneben ist oder mit einer Vielzahl von Vertiefungen oder Erhebungen versehen ist.

7. Ventil (30) nach einem der vorhergehenden Ansprüche, wobei der Verriegelungskopf (34) des Ventilkörpers (31) mit einem Oberflächenabschnitt (347) versehen ist, der mindestens teilweise roh oder uneben ist oder mit einer Vielzahl von Vertiefungen oder Erhebungen versehen ist.

8. Ventil (30) nach einem der vorhergehenden Ansprüche, wobei der Ventilkopf (35) mit mindestens einem Paar elastischer und gegenüberliegenden Hauptlaschen (358) versehen ist, die mindestens in Bezug auf den gewölbten Abschnitt (350) vorstehen.

9. Ventil (30) nach einem der vorhergehenden Ansprüche, wobei der Ventilkopf (35) mit mindestens einem Paar elastischer und gegenüberliegender Nebenlaschen (359) versehen ist, die sich innerhalb des Umrisses des gewölbten Abschnitts (350) befinden und die geeignet sind, Ausnehmungen (349), die an dem Stangenkörper (33) des Ventilkörpers (31) ausgebildet sind, einzurasten.

10. Ventilsensoranordnung (1), umfassend:
- ein Reifenaufblasventil (30) nach einem der vorhergehenden Ansprüche;
- einen Drucksensor (20), umfassend:
- ein Gehäuse (21), in dem Sensormittel (211) aufgenommen sind;
- einen Montagehals (22), der einstückig mit dem Gehäuse (21) ausgebildet wird, der mit einer oberen Fläche (23), einer gegenüberliegenden unteren Fläche (24) und einer Durchgangsleitung (25) zwischen der oberen Fläche (23) und der unteren Fläche (24) versehen ist;
wobei der Verriegelungskopf (34) des Ventils (30) ein unkreisförmiges Verriegelungselement ist, das dazu konfiguriert ist, die Durchgangsleitung (25) des Drucksensors (20) zu überqueren, wenn es sich in einer ersten Winkelstellung befindet, und nicht zu überqueren, wenn es um 90° in eine zweite Winkelstellung (P2) gedreht wird, um eine Bajonettkupplung zwischen dem Ventil (30) und dem Drucksensor (20) zu erhalten.

11. Ventilsensoranordnung (1) nach Anspruch 10, wobei die untere Fläche (24) des Montagehalses (22) des Drucksensors (20) eine konkave Gestalt mit einer kuppelförmigen Vertiefung aufweist,
und
wobei zwischen dem gewölbten Abschnitt (350) des Ventilkopfes (35) und der konkaven unteren Fläche (24) des Montagehalses (22) des Drucksensors (20) eine Kugelkupplung erhalten wird, um die Position des Drucksensors (20) einzustellen.

12. Verfahren zum Einbau einer Ventilsensoranordnung nach einem der Ansprüche 10 oder 11, umfassend:
- Einbauen des Ventilkopfes (35) auf dem Ventilkörper (31);
- Einführen des Verriegelungskopfes (34) des Ventilkörpers (31) des Ventils (1) in die Durchgangsleitung (25) des Montagehalses (22) des Drucksensors (20) von der unteren Fläche (24) des Montagehalses (22).

13. Verfahren nach Anspruch 12, umfassend:
- Einschrauben der Einstellmutter (36) entlang des Ventilkörpers (31), Ziehen des Verriegelungskopfes (34), sodass er an die obere Fläche (23) des Montagehalses (22) angrenzt, und Drücken des Ventilkopfes (35), sodass er daran innerhalb der Vertiefung der unteren Fläche (24) des Montagehalses (22) angrenzt, wodurch das Ventil und der Drucksensor gleichzeitig in Position befestigt werden.

## Revendications

1. Une valve de gonflage de pneu de véhicule (30), comprenant :
un corps de valve (31) dans lequel des moyens de valve (311) sont logés, pourvu d'une extrémité distale et à laquelle un couvercle (312) est appliqué et d'une extrémité proximale opposée (314) se terminant par une tige de montage (32), ladite tige de montage (32) ayant un corps de tige (33) s'étendant à partir du corps de valve (31) et se terminant par une tête de verrouillage (34) de dimension supérieure audit corps de tige (33) ;
- une tête de valve (35), montée coulissante sur le corps de valve (31) à l'extrémité proximale (314), pourvue d'un trou (355) à travers lequel passe la tige de montage (32), avec une partie bombée (350) et une partie d'étanchéité (351), ladite partie bombée (350) étant disposée de manière proximale par rapport à la partie d'étanchéité (351) ;
- un écrou de réglage (36) pouvant être vissé sur le corps de valve (31) depuis l'extrémité distale ;
dans laquelle ladite tête de verrouillage (34) de la tige de montage (32) est disposée de manière proximale par rapport à ladite tête de valve (35),
**caractérisée en ce que** le corps de valve (31) présente au moins une paroi de butée (345) apte à engager au moins une des parois latérales (355') qui définissent le trou (355) qui traverse la tête de valve (35).

2. Une valve (30) selon la revendication 1, dans laquelle ladite partie bombée (350) est en forme d'hémisphère.

3. Une valve (30) selon l'une quelconque des revendications précédentes, dans laquelle ladite tige de montage (32) est substantiellement en forme de T.

4. Une valve (30) selon l'une quelconque des revendications précédentes, dans laquelle la tête de verrouillage (34) est orientée sur un plan coïncidant ou parallèle à un plan défini par ladite au moins une paroi de butée (345).

5. Une valve (30) selon l'une quelconque des revendications précédentes, dans laquelle la tête de verrouillage (34) est tournée par rapport à un plan coïncidant ou parallèle défini par ladite au moins une paroi de butée (345).

6. Une valve (30) selon l'une quelconque des revendications précédentes, dans laquelle la partie bombée (350) de la tête de valve (35) est pourvue d'une portion de surface (357) qui est au moins partiellement rugueuse ou irrégulière ou pourvue d'une pluralité de creux ou de reliefs en surface.

7. Une valve (30) selon l'une quelconque des revendications précédentes, dans laquelle la tête de verrouillage (34) du corps de valve (31) est pourvue d'une portion de surface (347) qui est au moins partiellement rugueuse ou irrégulière ou pourvue d'une pluralité de creux ou de reliefs en surface.

8. Une valve (30) selon l'une quelconque des revendications précédentes, dans laquelle la tête de valve (35) est pourvue d'au moins une paire de rabats principaux élastiques et opposés (358) au moins partiellement saillants par rapport à la partie bombée (350).

9. Une valve (30) selon l'une quelconque des revendications précédentes, dans laquelle la tête de valve (35) est pourvue d'au moins une paire de rabats secondaires élastiques et opposés (359) contenus dans le contour de la partie bombée (350), aptes à s'enclencher de manière élastique dans des évidements (349) réalisés sur le corps de tige (33) du corps de valve (31).

10. Un ensemble valve-capteur (1) comprenant :
- une valve de gonflage de pneu (30) selon l'une quelconque des revendications précédentes ;
- un capteur de pression (20) comprenant :
- un boîtier (21) dans lequel des moyens de capteur (211) sont logés ;
- un col de montage (22), formé d'un seul tenant avec le boîtier (21), pourvu d'une surface supérieure (23), d'une face inférieure opposée (24), et d'un conduit traversant (25) entre la surface supérieure (23) et la face inférieure (24) ;
dans lequel la tête de verrouillage (34) de la valve (30) est un élément de verrouillage non circulaire, configuré pour traverser, lorsqu'il est dans une première position angulaire (P1), ledit conduit traversant (25) du capteur de pression (20), et pour ne pas le traverser, lorsqu'il est tourné de 90° en une seconde position angulaire (P2), ledit conduit traversant (25) du capteur de pression (20), afin d'obtenir un couplage à baïonnette entre la valve (30) et le capteur de pression (20).

11. Un ensemble valve-capteur (1) selon la revendication 10, dans lequel ladite face inférieure (24) du col de montage (22) du capteur de pression (20) est concave, avec une concavité en forme de dôme, et dans lequel, entre la partie bombée (350) de la tête de valve (35) et la face inférieure concave (24) du col de montage (22) du capteur de pression (20), un couplage sphérique est obtenu pour régler la position du capteur de pression (20).

12. Un procédé d'assemblage d'un ensemble valve-capteur selon l'une des revendications 10 ou 11, qui comprend :
- le montage de la tête de valve (35) sur le corps de valve (31) ;
- l'insertion de la tête de verrouillage (34) du corps de valve (31) de la valve (1) dans le conduit traversant (2) du col de montage (22) du capteur de pression (20) à partir de la face inférieure (24) du col de montage (22).

13. Un procédé selon la revendication 12, qui comprend :
le vissage de l'écrou de réglage (36) le long du corps de valve (31), le tirage de la tête de verrouillage (34) pour qu'elle vienne en butée contre la surface supérieure (23) du col de montage (22), et la poussée de la tête de valve (35) pour qu'elle vienne en butée à l'intérieur de la concavité de la face inférieure (24) du col de montage (22), contraignant simultanément la valve et le capteur de pression en position.
